# FASCICULE DE BREVET EUROPEEN

(11) **EP 1 538 428 B1**
(45) Date de publication et mention de la délivrance du brevet: **06.12.2006**
(21) Numéro de dépôt: 04356181.0
(22) Date de dépôt: 18.11.2004
(51) Int. Cl.: G01G 19/414, G01G 19/44

(54) **Appareil de pesage à clavier de saisie alphanumérique integré**
Wiegevorrichtung mit integrierter Tastatur zur alphanumerischen Eingabe
Weighing apparatus with an integrated keyboard for an alphanumeric input

(30) Priorité: 02.12.2003 FR 0314131
(43) Date de publication de la demande: 08.06.2005
(73) Titulaire: SEB S.A., 69130 Ecully (FR)
(72) Inventeur: Simond, Bénédicte, 74150 Bloye (FR); Maziere, Hervé, 74000 Annecy (FR)
(74) Mandataire: Kiehl, Hubert

(56) Documents cités:
- EP-A- 0 852 329
- US-A1- 2002 134 589

## Description

La présente invention est relative à un appareil de pesage du genre pèse-personne ou balance de ménage, notamment du type électronique. Un tel appareil comporte généralement un plateau de réception d'une charge à peser supporté par au moins un capteur se déformant sous l'action de la charge appliquée et comportant des jauges d'extensométrie associées à un circuit électronique de mesure délivrant un signal électrique qui est fonction du poids à mesurer.

Le brevet FR 2 623 623 au nom de la demanderesse décrit un tel appareil comportant un capteur unique en forme de barreau métallique fixé à ses extrémités respectivement au plateau et à un socle de l'appareil. Le barreau forme le corps d'épreuve supportant les jauges d'extensométrie reliées à un circuit électronique. Lors de l'application d'une charge sur le plateau, le barreau métallique est soumis principalement à un effort de flexion, mais également à des moments parasites, notamment de torsion, du fait de l'excentricité du point d'application de la charge sur le plateau. Le circuit électronique permet de déterminer, à partir des informations transmises par les jauges d'extensométrie sur la déformation du barreau, l'intensité de la force appliquée sur le plateau, ainsi que la position de son point d'application dans le plan formé par le plateau de réception de charge de l'appareil de pesage. Lors de calcul du poids, la connaissance de la position de la charge appliquée permet de corriger la mesure de l'intensité de la force appliquée qui est faussée du fait de l'excentricité du point d'application de la force par rapport au centre de symétrie du barreau métallique disposé sous le plateau.

Le brevet FR 2 734 050 au nom de la demanderesse décrit un autre appareil du même type, mais comportant quatre capteurs supportant le plateau de réception de charge. Chaque capteur comporte un barreau formant corps d'épreuve, supportant des jauges d'extensométrie qui émettent des signaux de déformation lorsqu'une charge est appliquée sur le plateau, les capteurs adressant ensuite ces signaux à un circuit électronique commun. En connaissant la force supportée par chacun des capteurs, on en déduit ensuite l'intensité de la force appliquée sur le plateau et son point d'application.

Les appareils de pesage modernes intègrent de plus en plus de nouvelles fonctions, en plus de celle traditionnelle de pesage. De telles fonctions peuvent être : une mise en mémoire de données mesurées, un affichage particulier d'un ou plusieurs paramètres, par exemple celui de l'heure, etc. La plupart des appareils de pesage traditionnels comportent un clavier de commande de ces fonctions posé sur une surface adjacente au plateau et s'avèrent de ce fait encombrants.

Un tel appareil est connu du document DE 91 07 757 qui décrit une balance électronique comportant une unité de traitement des signaux et un affichage où apparaît un menu de sélection et de réglage de différents paramètres. Toutefois, outre le fait que les touches de commande qui appellent les menus et les noms préenregistrés dans la mémoire de la balance se trouvent sur un côté de l'appareil augmentant son encombrement, la programmation initiale des paramètres de la balance nécessite, de plus, un clavier de saisie additionnel relié à l'unité de traitement.

Une solution a été proposée dans le brevet EP 0 852 329 au nom de la demanderesse où le clavier de commande des fonctions spécifiques de l'appareil de pesage était intégré au plateau. L'appareil de pesage comporte un plateau de réception de la charge à peser comprenant au moins une zone matérialisée en une position prédéterminée du plan du plateau de réception ainsi qu'une unité de traitement électronique permettant d'une part de transformer le signal issu du capteur de poids en intensité de la charge appliquée et d'autre part de déterminer le point d'application de la charge sur le plateau. L'identification par l'unité de traitement d'une charge d'intensité prédéterminée présente en la zone matérialisée permet d'activer une ou plusieurs fonctions pouvant être : une attribution de zone de mémoire, un réglage d'horloge électronique, un choix d'affichage de données.

Fonctionnant à satisfaction, cet appareil s'est toutefois avéré d'une utilisation limitée. Ainsi, pour réaliser la fonction de mise en mémoire, l'utilisateur doit choisir entre quatre mémoires numérotées et identifiées par des repères distincts sur la zone du plateau. Or, ces repères impersonnels ne rappellent pas forcement à l'utilisateur quelle est la zone de mémoire où il doit inscrire ses propres mesures de poids. De surcroît, l'augmentation de la taille de la mémoire doit pouvoir permettre d'y inscrire plusieurs paramètres différents par exemple l'âge, la taille, etc., relatifs à plusieurs personnes. Or, la saisie de tous ces paramètres ne peut se faire qu'avec des touches qui font appel chacune à une fonction différente, ce qui pose un problème d'encombrement, l'espace du plateau étant limité.

Le but de l'invention est de remédier au moins en partie à ces inconvénients et de proposer un appareil de pesage permettant à l'utilisateur de saisir des données alphanumériques personnelles et de les afficher, tout en étant de construction compacte et fiable en fonctionnement.

Un autre but de l'invention est un appareil de pesage permettant à l'utilisateur de reconnaître rapidement et sans hésitation l'affichage d'une zone de mémoire qui lui est attribuée et/ou de pouvoir corriger ou compléter l'affichage par la suite.

Un autre but de l'invention est un appareil de pesage permettent à l'utilisateur de communiquer avec un menu déroulant qui apparaît à l'écran d'affichage sans nécessiter de clavier de saisie indépendant.

Un but supplémentaire de l'invention est un appareil de pesage à fonctions multiples, de construction compacte et fiable en fonctionnement, tout en pouvant être industrialisé pour des coûts moindres.

Ces buts sont réalisés avec un appareil de pesage comportant
- un plateau de réception d'une charge à peser,
- au moins un capteur se déformant sous l'action d'une charge appliquée au plateau, ledit capteur étant connecté à
- une unité de traitement électronique comportant :

- un circuit électronique d'évaluation adapté à transformer un signal de déformation émis par le capteur en des signaux électriques représentatifs de l'intensité de la charge appliquée et de la position du point d'application de ladite charge dans le plan du plateau de réception,
- des moyens de calcul du poids de ladite charge en fonction desdits signaux électriques,
- des moyens électroniques accessoires adaptés à réaliser au moins une fonction accessoire autre que le calcul du poids de la charge,
- des moyens de comparaison adaptés à comparer l'intensité d'une charge appliquée sur le plateau à une intensité de référence et à actionner lesdits moyens de calcul du poids ou lesdits moyens électroniques accessoires en fonction du signal de sortie émis par les moyens de comparaison; et reliée à
- un écran d'affichage
du fait que, lorsque actionnés, lesdits moyens électroniques accessoires sont aptes à convertir l'intensité et/ou la périodicité et/ou la position de l'application de la charge dans le plan du plateau en un caractère alphanumérique d'une part affiché à l'écran et d'autre part pris en compte dans l'élaboration ultérieure d'une fonction de personnalisation de la mémoire et/ou d'appel d'un menu déroulant par lesdits moyens électroniques accessoires.

Ainsi, lesdits moyens électroniques accessoires deviennent actifs lorsqu'ils reçoivent le signal de sortie des moyens de comparaison. Ce signal est issu d'une comparaison entre l'intensité de la charge appliquée sur le plateau et une intensité de référence. A titre d'exemple, cette intensité de référence peut correspondre à une charge de 5 kg. Ainsi, dans le cadre d'un pèse-personne, les moyens électroniques accessoires peuvent être activés tant que l'intensité mesurée est inférieure à l'intensité de référence. A l'inverse, dans le cadre d'une balance de ménage, les moyens électroniques accessoires peuvent être activés si l'intensité mesurée est supérieure à l'intensité de référence.

Par caractères alphanumériques, on comprend des caractères d'imprimerie comprenant les lettres de l'alphabet, les chiffres, mais aussi quelques symboles d'usage général, tels que "=", "+", "-", "." ou "," permettant d'inscrire un mot voire même une équation à l'écran d'affichage.

Les moyens électroniques accessoires, lorsqu'ils sont actionnés, peuvent soit faire défiler les caractères à l'écran d'affichage à un rythme plus ou moins rapide selon l'intensité de l'appui et les valider un par un par un actionnement spécifique (par exemple par un appui de courte durée, par deux appuis successifs, etc.), soit les sélectionner un par un lorsqu'ils apparaissent en bloc à l'écran d'affichage en se déplaçant de l'un à l'autre par des appuis successifs sur le plateau, ou encore les inscrire un par un à l'écran, par exemple, par des appuis successifs sur le plateau.

Le mot ou l'expression inscrits à l'écran d'affichage en actionnant lesdits moyens électroniques accessoires sont ensuite associés à une commande remplissant une fonction accessoire transmise ultérieurement à l'unité de traitement électronique. Cette commande peut être celle de personnalisation d'une zone de mémoire et/ou d'appel d'un menu déroulant qui, lui, permet l'accès à d'autres fonctions et/ou paramètres de l'appareil ou encore peut commander l'arrêt de l'appareil.

Ainsi, le plateau de l'appareil de pesage est directement utilisé comme clavier de saisie servant à inscrire tout caractère d'imprimerie à l'écran et en même temps à mesurer un poids, la commande de l'une ou l'autre de ces fonctions se faisant de manière automatique par une même unité de traitement, sans intervention de l'utilisateur. L'avantage d'une telle solution est de permettre une saisie de données complexe à l'aide d'un système simple à utiliser, en faisant uniquement appel à des moyens électroniques de programmation, le gabarit de l'appareil ne dépassant pas celui d'un appareil traditionnel.

Selon un mode préféré de réalisation de l'invention, ladite fonction accessoire ultérieure est une personnalisation de la mise en mémoire de données.

Ceci permet à l'utilisateur d'attribuer un nom (en l'occurrence son prénom) à la mémoire qu'il occupe dans son pèse-personne pour lui permettre d'identifier plus facilement s'il a bien été reconnu par l'appareil lorsqu'il se positionne sur le plateau de réception, ou bien pour qu'il choisisse plus facilement la mémoire qui lui est attribuée lorsque l'appareil lui en propose plusieurs. L'entrée du nom dans une zone de mémoire peut se faire directement lorsque le mot "mémoire" est affiché à l'écran par l'unité de traitement ou indirectement lorsque l'utilisateur le choisit parmi plusieurs paramètres affichés à l'écran, notamment en appelant un menu déroulant.

Selon un autre mode de réalisation de l'invention, ladite fonction accessoire ultérieure consiste à appeler un menu déroulant afin de sélectionner ses variables.

Ainsi, en activant lesdits moyens électroniques accessoires, l'utilisateur peut appeler un menu déroulant en inscrivant le mot "menu" à l'écran et ensuite à sélectionner ses variables en tapant leur nom ou les premières lettres de leur nom. Un tel menu permet à l'utilisateur d'inscrire différents paramètres personnels dans la zone de mémoire qui lui est attribuée, de régler d'autre paramètres, voire d'accéder à d'autres fonctions de l'appareil, telles la date, l'heure, choisir un type d'affichage spécifique, etc.

Avantageusement, chaque fonction accessoire est en outre modifiée suivant l'intensité de la charge appliquée en ladite zone matérialisée du plateau.

Ceci confère une fonction accessoire supplémentaire permettant, par exemple, d'augmenter la vitesse de défilement des caractères à l'écran, de changer de type de caractère et de basculer d'un caractère alphabétique à un numérique, etc.

De préférence, lesdits moyens électroniques accessoires sont actionnés lorsque l'intensité de la charge appliquée est inférieure ou égale à ladite intensité de référence.

Ceci est particulièrement avantageux dans le cadre d'un pèse-personne où l'utilisateur peut actionner la touche d'appui avec l'un des ses orteils ou l'un de ses doigts, la force d'appui étant dans ce cas bien inférieure à celle mesurée lorsqu'il monte sur le plateau de l'appareil.

Avantageusement, l'appareil comprend au moins deux zones matérialisées en des positions prédéterminées différentes dans le plan du plateau de réception, les moyens électroniques accessoires étant adaptés à réaliser deux fonctions accessoires différentes lorsque le circuit électronique détecte l'application d'une charge en lesdites zones matérialisées.

On aurait pu envisager l'utilisation d'une seule zone matérialisée pour faire défiler à l'écran une série de caractères alphanumériques, deux appuis successifs au niveau de cette même zone faisant office de validation de saisie. On préfère toutefois, notamment pour faciliter l'utilisation de l'appareil, deux touches de commande : une première pouvant être une fonction de saisie des caractères alphanumériques et une deuxième une fonction de validation de la saisie.

Dans une variante de l'invention, l'appareil comprend dix zones matérialisées en des positions prédéterminées différentes du plan du plateau de réception.

Ainsi, neuf zones prédéterminées réalisent la fonction de saisie des caractères alphanumériques et la dixième est une fonction de validation de la saisie. Les lettres de l'alphabet et les chiffres peuvent ainsi être répartis entre les neuf zones prédéterminées. Lorsqu'un appui d'intensité prédéterminée est effectué sur l'une des neuf zones, l'écran d'affichage peut ainsi rendre une lettre ou un chiffre, l'appui sur la dixième zone validant ensuite la sélection.

Dans une autre variante de l'invention, l'appareil comprend trente zones matérialisées en des positions prédéterminées différentes du plan du plateau de réception.

Ainsi, vingt-six zones matérialisées réalisent chacune la fonction de saisie d'un caractère alphanumérique, par exemple une lettre de l'alphabet, une zone supplémentaire remplit une fonction de validation de la saisie, encore une autre zone pouvant être prévue pour réaliser un retour en arrière et les deux zones restantes permettant une navigation au sein de l'afficheur.

D'autres zones supplémentaires pourraient être rajoutées pour d'autres fonctions accessoires, telles des flèches de navigation droite et gauche, respectivement haut et bas, etc., le nombre de ces zones étant limité par la précision de mesure du point d'application d'une charge. Ainsi, la distance minimale entre deux zones adjacentes est de préférence d'environ 1 cm.

Utilement, lesdites zones matérialisées sont des repères réalisés sur un support qui est destiné à être appliqué sur le plateau de réception.

Un tel support peut être un gabarit muni d'épargnes que l'utilisateur positionne de manière amovible sur le plateau ou encore un film autocollant qui est positionné sur le plateau de manière détachable ou fixe, les repères pouvant être par exemple imprimés sur le support.

De préférence, lesdites zones matérialisées sont des repères réalisés au moins en partie directement sur le plateau de réception, l'autre partie étant des repères réalisés sur un support destiné à être appliqué sur le plateau de réception.

Ces repères peuvent avantageusement être réalisés par une technique de sérigraphie directement sur le plateau de l'appareil de pesage, toute autre technique d'imprimerie ou de gravure pouvant également être utilisée. Dans une variante, les repères sont réalisés en partie par sérigraphie directement sur le plateau, les autres repères étant réalisés ou imprimés sur un gabarit ou un film qui est positionné sur le plateau de manière amovible ou fixe.

L'invention sera mieux comprise à l'étude des modes de réalisation pris à titre nullement limitatif et illustrés dans les figures annexées dans lesquelles :
- la figure 1 est une vue schématique de dessus d'un appareil de pesage selon un premier mode de réalisation de l'invention;
- la figure 2 est une vue schématique en perspective d'un appareil de pesage selon un second mode de réalisation de l'invention;
- la figure 3 est une vue en perspective d'une première variante de plateau d'un appareil de pesage conforme à l'invention;
- la figure 4 est une vue de dessus d'un exemple d'écran d'affichage d'un appareil de pesage conforme à l'invention;
- la figure 5 est une vue en perspective d'une deuxième variante de plateau d'un appareil de pesage conforme à l'invention;
- la figure 6 est un schéma synoptique de fonctionnement de l'appareil de pesage conforme à l'invention.

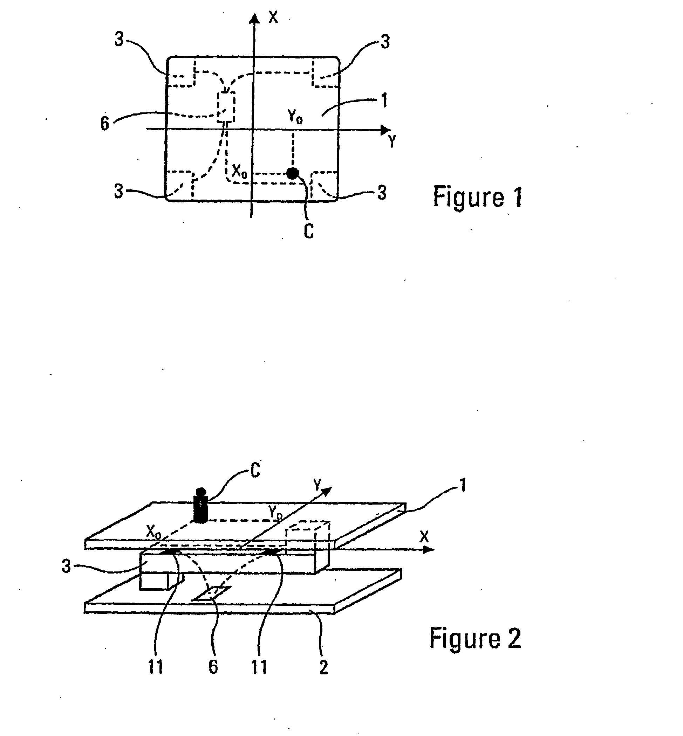

La figure 1 représente un appareil de pesage du type décrit dans la demande de brevet FR 2 734 050 comportant un plateau 1 de réception d'une charge à peser supporté en sa périphérie par plusieurs capteurs 3. En l'occurrence, quatre capteurs 3 formant les pieds de l'appareil sont disposés aux coins d'un plateau 1 de forme rectangulaire, chaque capteur 3 étant amené à se déformer sous l'action d'une charge C appliquée sur le plateau 1. L'appareil comporte également une unité de traitement électronique permettant le calcul des forces engendrées par la charge C et leurs points d'application dans le plan du plateau. Plus particulièrement, les capteurs 3 sont connectés à un circuit électronique 6 commun adapté à transformer le signal de déformation émis par les jauges d'extensométrie de chaque capteur en des signaux électriques représentatifs de l'intensité I de la charge appliquée C et de la position X₀ , Y₀ du point d'application de ladite charge C dans le plan du plateau 1 de réception, défini par les axes X, Y sur la figure 1. Ces signaux électriques sont ensuite transformés en une valeur numérique du poids par des moyens électroniques de calcul de poids et sont affichés sur un écran d'affichage de l'appareil.

Un autre type d'appareil à capteur unique est représenté à la figure 2, ce type d'appareil étant décrit plus en détail dans la demande de brevet FR 2 623 623.

Cet appareil comporte un capteur 3 sous forme d'un barreau métallique fixé à l'une de ses extrémités au plateau 1 et à l'autre extrémité à un socle 2 de l'appareil. Des jauges d'extensométrie 11 sont disposées sur le barreau et sont connectées au circuit électronique 6 qui fonctionne comme précédemment décrit.

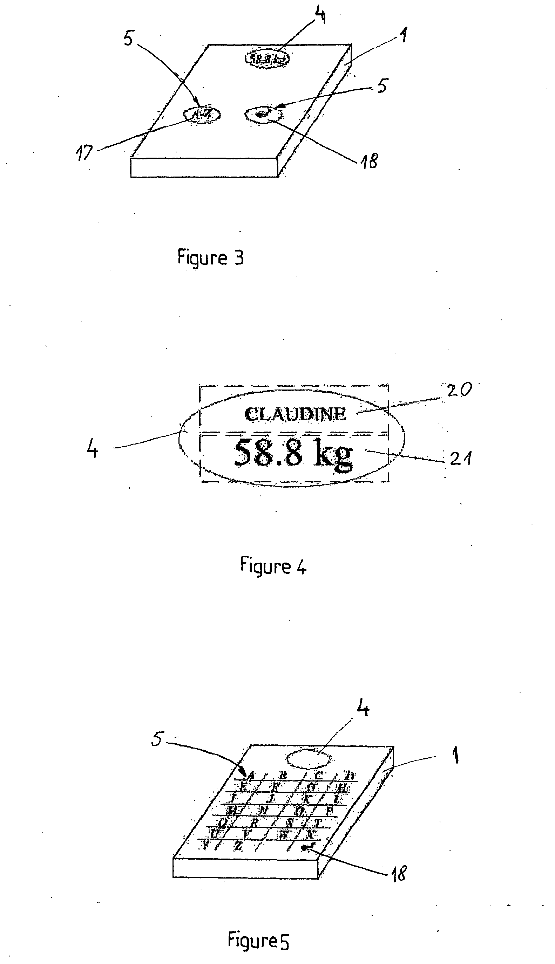

Plus particulièrement selon l'invention, le plateau 1 de l'appareil comprend au moins une zone matérialisée 5 en une position prédéterminée, ou en des positions prédéterminées, du plan du plateau de réception permettant la saisie des caractères alphanumériques à un écran d'affichage 4 qui est du type LCD. La figure 3 illustre une première variante de l'invention, dans laquelle deux zones matérialisées 5 sont constituées dans le plan du plateau 1 pour former une première touche de saisie 17 et une deuxième touche de validation 18. La touche d'appui 17 permet de faire défiler les lettres A-Z de l'alphabet et les numéros 0 à 9, voire même quelques symboles d'usage général à l'écran d'affichage 4. La touche 18 permet de valider la saisie de chaque caractère individuellement et, par un double appui, d'indiquer la fin de la saisie. Dans une autre réalisation, la touche de saisie 17 permet de saisir les caractères un par un à l'écran, une validation de chaque caractère se faisant par un double appui sur cette même touche, alors que l'appui sur la touche de validation 18, permet d'envoyer la saisie à l'unité de traitement.

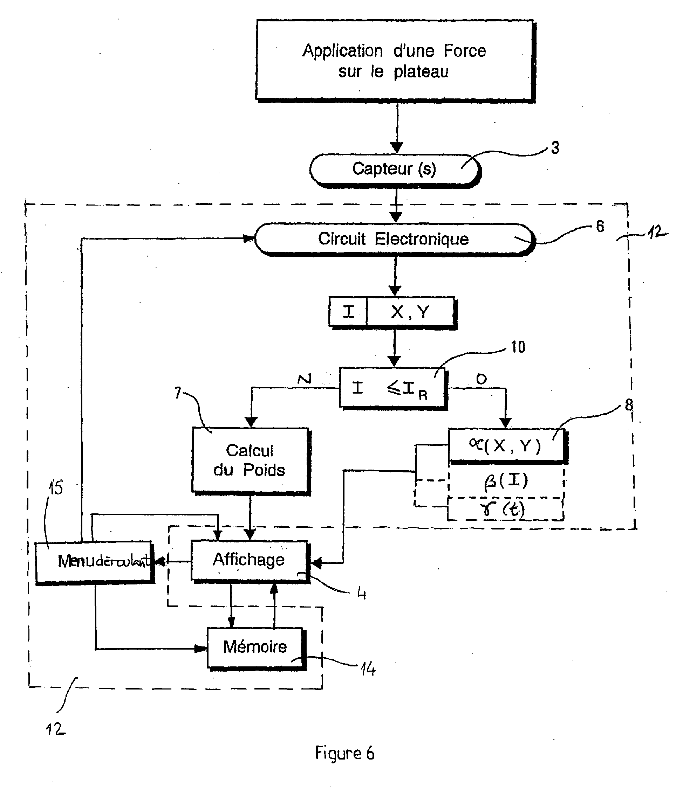

Tel que visible à la figure 6, le circuit électronique 6 fait partie d'une unité de traitement 12 qui comporte également des moyens de comparaison 10. Les moyens de comparaison 10 sont adaptés à comparer l'intensité I d'une charge C appliquée sur le plateau 1 avec une intensité de référence I_{R} et à actionner les moyens de calcul du poids 7 ou les moyens électroniques accessoires 8 en fonction d'un signal O, N émis par les moyens de comparaison 10. L'appareil de pesage est ainsi commuté automatiquement soit en mode pesée soit en mode clavier de saisie. Dans un mode préféré de réalisation de l'invention, les moyens électroniques accessoires sont actionnés lorsque l'intensité I de la charge appliquée est inférieure à une intensité de référence I_{R}, cette dernière pouvant être de 5 kg pour un pèse-personne. Ainsi, chaque zone matérialisée 5 devient active lorsque l'utilisateur applique une force d'intensité inférieure à celle de référence en un point précis de coordonnées X, Y de la surface du plateau. Chaque zone matérialisée 5 peut ainsi remplir une fonction différente α (X,Y) sur la figure 6, selon son positionnement sur le plateau 1. De surcroît, les moyens électroniques accessoires 8 disposent de moyens électroniques supplémentaires β (I) permettant de modifier la fonction accessoire associée à une zone matérialisée 5 suivant l'intensité de l'appui. La fonction accessoire peut encore être modifiée selon la périodicité des appuis, notamment de la période de temps écoulée entre deux appuis successifs, par une fonction γ (t).

Ainsi, on peut utiliser l'intensité de l'appui sur la touche de saisie 17 pour incrémenter les caractères alphanumériques, par exemple les lettres A, B, ...,Z de manière plus ou moins rapide, en fonction de l'intensité de l'appui, jusqu'à l'obtention du caractère désiré.

Dans une autre réalisation, on pourrait envisager une troisième zone matérialisée dans le plan du plateau formant une touche de saisie supplémentaire qui permet de faire défiler la série de caractères, par exemple les lettres de l'alphabet, dans le sens inverse à celui de la touche de saisie 17. Ceci permettrait d'éviter de refaire un tour complet de tous les caractères si l'on était passé trop vite sur le caractère désiré. La vitesse de défilement des caractères pourrait être variée en variant l'intensité de l'appui.

La figure 5 montre un plateau 1 d'un appareil de pesage selon une deuxième variante de réalisation de l'invention, le plateau 1 étant dans ce cas divisé en au moins vingt-six zones matérialisées 5 formant un abécédaire intégré au plateau. Ainsi, les zones identifiées par les lettres de l'alphabet sur la figure forment des touches de saisie pour un ou plusieurs caractères, en l'occurrence une lettre. Une dernière zone forme touche de validation 18 de la saisie.

Des touches supplémentaires associant d'autres fonctions peuvent être rajoutées dans la variante de la figure 3 ainsi que dans celle de la figure 5. Ces touches supplémentaires pourraient être par exemple des flèches de navigation gauche et droite ou haut et bas permettant de passer d'un caractère saisi à un autre, ou de saisir un caractère parmi plusieurs affichés à l'écran, voire, dans une autre variante, de pouvoir naviguer au sein d'un menu affiché à l'écran.

Les zones matérialisées 5 peuvent être identifiées sur le plateau 1 par une sérigraphie permanente et/ou par un gabarit et/ou par un film autocollant que l'utilisateur va positionner sur le plateau 1. Le gabarit permet de délimiter la surface d'une zone dans le plan du plateau 1 et de la rendre accessible à l'utilisateur. Un tel gabarit peut avoir la forme d'une plaque comportant des épargnes ou orifices traversants réalisés dans son épaisseur et il est placé sur le plateau 1 de manière amovible. Le film autocollant peut, lui, comporter des repères imprimés sur sa face supérieure et est appliqué avec l'autre face sur le plateau 1. Toutes ces zones matérialisées 5 ainsi réalisées forment un clavier virtuel de saisie des caractères alphanumériques à l'écran d'affichage 4, le clavier étant intégré au plateau 1 de l'appareil de pesage.

Tel que visible à la figure 4, l'écran d'affichage 4 de l'appareil de pesage dispose d'une zone d'affichage d'identification 20, alphanumérique ou graphique, dans laquelle sont inscrits les caractères saisis à l'écran avec les touches de saisie. Une zone adjacente du type à segments, alphanumérique ou graphique forme zone d'affichage du poids 21.

En fonctionnement, l'utilisateur se place sur le plateau 1 de l'appareil de pesage et obtient son poids affiché sur la zone d'affichage du poids 21 de l'écran d'affichage 4. S'il s'agit d'une première utilisation, l'appareil lui demandera de saisir son prénom. Pour ceci, l'utilisateur saisit à l'écran les lettres de son prénom par des appuis successifs sur la touche de saisie 17, pour l'appareil de la figure 3, ou sur les touches de l'alphabet A-Z déjà matérialisées sur le plateau 1 de l'appareil de la figure 5. La fin de la saisie est communiquée en appuyant sur la touche de validation 18. A ce moment, le nom de l'utilisateur est associé à une zone de mémoire 14 qui va dorénavant stocker les valeurs de son poids, en commençant par la valeur courante. Cet état de l'afficheur est montré en figure 4. Lors des utilisations suivantes, lorsque l'appareil de pesage reconnaîtra l'utilisateur, il lui affichera automatiquement son prénom dans la zone d'affichage d'identification 20. Dans une variante, l'affichage du prénom pourra être suivi par exemple de son écart de poids avec le poids précédemment enregistré dans cette même mémoire.

Ainsi, l'appareil de l'invention permet de restituer à l'utilisateur non plus un numéro de mémoire impersonnel, mais il lui affiche directement son prénom qu'il aurait enregistré lors de la première utilisation. Par contre, si l'écart de poids par rapport au dernier enregistré est trop important et l'utilisateur n'est pas reconnu par l'appareil, l'appareil peut lui proposer de choisir parmi plusieurs noms affichés à l'écran ou alors de ressaisir son prénom. Ainsi, des touches d'appui permettant de faire défiler tous les prénoms des différentes personnes déjà enregistrés dans la mémoire ou pour permettre de changer de nom peuvent être prévues dans des zones matérialisées sur la surface du plateau 5 et venir compléter ainsi un tel clavier virtuel de l'invention.

Le nombre de zones matérialisées 5 formant touches d'appui, de validation ou de navigation d'un tel clavier virtuel sont limitées par l'étendue de la surface disponible du plateau et par la précision avec laquelle peut être déterminé le point d'application d'une charge sur le plateau 1, cette dernière étant d'environ 1 cm pour l'appareil de l'invention.

Dans un autre mode de réalisation de l'invention, la saisie du mot "menu" à l'écran d'affichage 4 permet d'appeler à l'écran un menu déroulant 15 qui donne accès à d'autres fonctions de l'appareil, par exemple pour proposer un affichage personnalisé, ou pour régler des paramètres affichés à l'écran, pour consulter les enregistrements placés dans la zone de mémoire 14, pour commander l'arrêt de l'appareil, etc.

D'autres variantes et modes de réalisation peuvent être envisagés sans sortir du cadre de ces revendications.

## Revendications

1. Appareil de pesage comportant
- un plateau (1) de réception d'une charge à peser,
- au moins un capteur (3) se déformant sous l'action d'une charge appliquée au plateau (1), ledit capteur (3) étant connecté à
- une unité de traitement (12) électronique comportant :
- un circuit électronique (6) d'évaluation adapté à transformer un signal de déformation émis par le capteur (3) en des signaux électriques représentatifs de l'intensité (I) de la charge appliquée et de la position (X, Y) du point d'application de ladite charge dans le plan du plateau (1) de réception,
- des moyens de calcul du poids (7) de ladite charge en fonction desdits signaux électriques,
- des moyens électroniques accessoires (8) adaptés à réaliser au moins une fonction accessoire autre que le calcul du poids de la charge,
- des moyens de comparaison (10) adaptés à comparer l'intensité (I) d'une charge appliquée sur le plateau à une intensité de référence (I_{R}) et à actionner lesdits moyens de calcul du poids (7) ou lesdits moyens électroniques accessoires (8) en fonction du signal de sortie (O,N) émis par les moyens de comparaison (10) ; et reliée à
- un écran d'affichage (4)
**caractérisé en ce que**, lorsque actionnés, lesdits moyens électroniques accessoires (8) sont aptes à convertir l'intensité et/ou la périodicité et/ou la position de l'application de la charge dans le plan du plateau (1) en un caractère alphanumérique d'une part affiché à l'écran et d'autre part pris en compte dans l'élaboration ultérieure d'une fonction de personnalisation de la mémoire et/ou d'appel d'un menu déroulant par lesdits moyens électroniques accessoires.

2. Appareil de pesage selon la revendication 1, **caractérisé en ce que** lesdits moyens électroniques accessoires sont actionnés lorsque l'intensité (I) de la charge appliquée est inférieure ou égale à ladite intensité de référence (I_{R}).

3. Appareil de pesage selon l'une des revendications 1 ou 2, **caractérisé en ce qu'**il comprend au moins deux zones matérialisées (5) en des positions prédéterminées différentes dans le plan du plateau (1) de réception, les moyens électroniques accessoires étant adaptés à réaliser deux fonctions accessoires différentes lorsque le circuit électronique (6) détecte l'application d'une charge en lesdites zones matérialisées (5).

4. Appareil de pesage selon la revendication 3, **caractérisé en ce qu**'il comprend dix zones matérialisées en des positions prédéterminées différentes du plan du plateau de réception.

5. Appareil de pesage selon la revendication 3, **caractérisé en ce qu**'il comprend trente zones matérialisées en des positions prédéterminées différentes du plan du plateau de réception.

6. Appareil de pesage selon l'une des revendications précédentes, **caractérisé en ce que** lesdites zones matérialisées sont des repères réalisés sur un support qui est destiné à être appliqué sur le plateau de réception.

7. Appareil de pesage selon l'une des revendications 1 à 5, **caractérisé en ce que** lesdites zones matérialisées sont des repères réalisés au moins en partie directement sur le plateau de réception, l'autre partie étant des repères réalisés sur un support destiné à être appliqué sur le plateau de réception.

## Claims

1. Weighing apparatus comprising:
· a platform (1) for receiving a load to be weighed; and
· at least one sensor (3) that deforms under the action of a load applied to the platform (1), said sensor (3) being connected to:
· an electronic processor unit (12) comprising:
· an electronic evaluation circuit (6) adapted to transform a deformation signal emitted by the sensor (3) into electrical signals representing the magnitude (I) of the applied load and the position (X,Y) of the point of application of said load in the plane of the load-receiving platform (1);
weight computation means (7) for computing said load as a function of said electrical signals;
accessory electronic means (8) adapted to perform at least one accessory function other than computing the weight of the load;
· comparator means (10) adapted to compare the magnitude (I) of a load applied to the platform with a reference magnitude (I_{R}) and to actuate said weight computation means (7) or said accessory electronic means (8) as a function of the signal (Y,N) emitted by the comparator means (10); said processor unit being connected to:
· a display screen (4);
said weighing apparatus being **characterized in that**, when actuated, said accessory electronic means (8) are suitable for converting the magnitude and/or the periodicity and/or the position of application of the load in the plane of the platform (1) into an alphanumeric character firstly displayed on the screen and secondly taken into account during subsequent performance by said accessory electronic means of a function of personalizing the memory and/or of calling up a scroll-through menu.

2. Weighing apparatus according to claim 1, **characterized in that** said accessory electronic means are actuated when the magnitude (I) of the applied load is less than or equal to said reference magnitude (I_{R}).

3. Weighing apparatus according to claim 1 or claim 2, **characterized in that** it has at least two marked zones (5) in different predetermined positions in the plane of the load-receiving platform (1), the accessory electronic means being adapted to perform two different accessory functions when the electronic circuit (6) detects application of a load in said marked zones (5).

4. Weighing apparatus according to claim 3, **characterized in that** it has ten marked zones in different predetermined positions in the plane of the load-receiving platform.

5. Weighing apparatus according to claim 3, **characterized in that** it has thirty marked zones in different predetermined positions of the load-receiving platform.

6. Weighing apparatus according to any preceding claim, **characterized in that** said marked zones are markers formed on a medium that is designed to be applied to the load-receiving platform.

7. Weighing apparatus according to any one of claims 1 to 5, **characterized in that** at least some of said marked zones are markers formed directly on the load-receiving platform, the remaining markers being markers formed on a medium designed to be applied to the load-receiving platform.

## Patentansprüche

1. Wiegevorrichtung mit
- einer Platte (1) zur Aufnahme einer zu wiegenden Last,
- mindestens einem Sensor (3), der sich unter der Wirkung einer auf die Platte (1) aufgelegten Last verformt, wobei der Sensor (3) an eine
- elektronischen Bearbeitungseinheit (12) angeschlossen ist, die folgendes aufweist:
- einen elektronischen Auswertungskreis (6), der ein vom Sensor (3) gesendeten Verformungssignal in elektrische Signale umwandeln kann, die für die Intensität (I) der aufgelegten Last und der Stellung (X, Y) des Auflagepunkts der Last in der Ebene der Aufnahmeplatte (1) repräsentativ ist,
- Mittel zum Berechnen des Gewichts (7) der Last in Abhängigkeit von den elektrischen Signalen,
- elektronische Zusatzmittel (8) zum Ausführen mindestens einer Zusatzfunktion, die eine andere als das Berechnen des Gewichts der Last ist,
- Vergleichsmittel (10) zum Vergleichen der Intensität (I) einer auf die Platte aufgelegte Last mit einer Referenzintensität (I_{R}) und zum Betätigen der Mittel zum Berechnen des Gewichts (7) oder der elektronischen Zusatzmittel (8) in Abhängigkeit von dem durch die Vergleichsmittel (10) gesendeten Ausgangssignal (O, N) ; wobei die elektronische Bearbeitungseinheit (10) mit
- einer Sichtanzeige (4) verbunden ist,
**dadurch gekennzeichnet, dass** wenn sie betätigt sind, die elektronischen Zusatzmittel (8) die Intensität und/oder die Periodizität und/oder die Position der aufgelegten Last in der Ebene der Platte (1) in ein alphanumerisches Zeichen umwandeln können, das einerseits in der Sichtanzeige angezeigt und andererseits in der späteren Ausarbeitung einer Personifizierungsfunktion des Speichers und/oder einer Aufruffunktion eines über die elektronischen Zusatzmittel ablaufenden Menüs berücksichtigt ist.

2. Wiegevorrichtung nach Anspruch 1, **dadurch gekennzeichnet, dass** die elektronischen Zusatzmittel betätigt werden, wenn die Intensität (I) der aufgelegten Last kleiner als oder gleich der Referenzintensität (I_{R}) ist.

3. Wiegevorrichtung nach einem de Ansprüche 1 oder 2, **dadurch gekennzeichnet, dass** sie mindestens zwei Bereiche (5) aufweist, die an vorgegebenen, in der Ebene der Aufnahmeplatte (1) unterschiedlichen Stellen dargestellt sind, wobei die elektronischen Zusatzmittel zwei verschiedene Zusatzfunktionen ausführen können, wenn der elektronische Schaltkreis (6) das Anlegen einer Last in den dargestellten Bereichen (5) erfasst.

4. Wiegevorrichtung nach Anspruch 3, **dadurch gekennzeichnet, dass** sie zehn Bereiche aufweist, die an vorgegebenen, unterschiedlichen Stellen der Ebene der Aufnahmeplatte dargestellt sind.

5. Wiegevorrichtung nach Anspruch 3, **dadurch gekennzeichnet, dass** sie dreißig Bereiche aufweist, die an vorgegebenen, unterschiedlichen Stellen der Ebene der Aufnahmeplatte dargestellt sind.

6. Wiegevorrichtung nach einem der vorhergehenden Ansprüche, **dadurch gekennzeichnet, dass** die dargestellten Bereiche Markierungen sind, die auf einem Träger gebildet sind, der zum Auflegen auf die Aufnahmeplatte vorgesehen ist.

7. Wiegevorrichtung nach einem der Ansprüche 1 bis 5, **dadurch gekennzeichnet, dass** die dargestellten Bereiche Markierungen sind, die mindestens teilweise unmittelbar auf der Aufnahmeplatte gebildet sind, wobei der andere Teil Markierungen sind, die auf einem Träger gebildet sind, der zum Auflegen auf die Aufnahmeplatte vorgesehen ist.
